# EUROPEAN PATENT SPECIFICATION

(11) **EP 0 417 727 B1**
(45) Date of publication and mention of the grant of the patent: **13.07.1994**
(21) Application number: 90117474.8
(22) Date of filing: 11.09.1990
(51) Int. Cl.: B62K 25/28

(54) **Motorcycle**
Motorrad
Motocyclette

(30) Priority: 11.09.1989 JP 232746/89
(43) Date of publication of application: 20.03.1991
(73) Proprietor: YAMAHA HATSUDOKI KABUSHIKI KAISHA, Iwata-shi Shizuoka-ken, 438 (JP)
(72) Inventor: Konno, Toshihiko, Iwata-shi, Shizuoka-ken (JP)
(74) Representative: Grünecker, Kinkeldey, Stockmair & Schwanhäusser Anwaltssozietät

(56) References cited:
- EP-A- 0 290 705
- US-A- 4 813 511
- US-A- 4 813 697

## Description

The invention relates to a motorcycle specifically to a motorcycle provided with a frame including a rear arm bracket swingably supporting a rear arm which is adapted to hold a rear wheel of the motorcycle, said rear arm comprising right side and left side arm portions and a cushion unit which is supported through the rear arm at its lower end and through the frame at its upper end, one of said arm portions of the rear arm being formed generally in an inverted V-shape with an obtuse angle between its legs enabling the engine exhaust pipes to extend sidewardly of a vehicle body of the motorcycle through a space left under the bend of side arm whereas the other of said side arm portions extends substantially straight in side view.

Conventionally there are some motorcycles having their exhaust pipes disposed in such a manner that they extend rearwardly of the vehicle through a space beneath its engine. As the rear portions of said exhaust pipes should be positioned desirably close to the vehicle body in order to obtain a large bank angle one of the side arm portions of the rear arm which, in turn, is swingably supported at a frame and holds the rear wheel at its rear end, is designed to an inverted V-shape (in side view) with an obtuse angle between its both legs enabling the exhaust pipes to extend from inside the vehicle body through the space beneath the bend of the arm portion to outside the vehicle body, then rearwardly and finally slantly upwards. Such a kind of motorcycle is equipped with a cushion unit joined at its lower end portion through link members to the boss portions on the lower side of the base portion of the rear arm and on a bower side of a stiffening transverse member. The exhaust pipes were designed to be bent in such a manner that they extend a long or around these link members and boss portions.

In order to avoid any interference in between the exhaust pipes with the boss portions of the rear arm and the link members to ensure a sufficient bank angle measures have been taken with such conventional motorcycles, as indicated above, to dispose the exhaust pipes as close to the longitudinal axis of the vehicle as possible. In conjuntion herewith portions of the exhaust pipes intersecting the rear arm were depressed inwardly or the distance to the ground was increased by depressing inwardly those portions of the exhaust pipe which were closest to the ground.

Such a design, however, implies drawbacks in that providing inwards depressions to avoid interference with the rear arm or to increase the distance to the ground involves throttling effects to the exhaust gas flow to be applied at these depressed portions. Moreover, although it is generally desirable to dispose the link members for supporting the cushion unit at a higher level in order to dispose the exhaust pipes as close to the rear arm as possible and avoiding interference in between the exhaust pipes and the link members, such a location is undesirable from the viewpoint of stability as the upwardly shifting of the cushion unit leads to the center of gravity for the entire motorcycle being slightly shifted upwards. Finally, as the cushion unit is supported through the boss portions on the lower side of the rear arm reinforcing transverse member, conventional motorcycles require some further reinforcement members or the like to connect the transverse member with the arm portions of the rear arm resulting in an increased vehicle weight.

Thus, in order to avoid the afore indicated drawbacks it is an objective of the present invention to provide a motorcycle awarding an increased design freedom for the disposal of the exhaust pipes to lead them rearwards. Moreover the invention aims to assure a maximum bank angle as well as a reinforced but light weight design of the rear wheels supporting structure which adds to a smooth driving behaviour of the motorcycle.

In order to achieve the afore indicated objectives the motorcycle according to the present invention is improved in that a cross-member is provided which extends transversly between the bend of the one V-shape am portion of the rear arm and the other opposite arm portion of the rear arm whereas a lower end portion of the cushion unit is rotatably supported within the range of said cross-member.

With the present invention the following main advantages and preferred effects are obtained:
Since a cross-member is spanned to extend cross wise between the bend of the angled V-shaped arm portion and the other arm portion of the rear arm and, moreover, the lower end portion of the cushion unit is joined within the range of the cross-member in its side view, it is possible to dispose the exhaust pipes beneath the bend of the V-shaped angled arm portions. Moreover sufficient space is provided to dispose the exhaust pipes just under the rear arm as well. Accordingly, as the exhaust pipes can be disposed very close to the vehicle body avoiding any interference in between the exhaust pipes and the rear arm, supporting the rear wheel, the bank angle of the vehicle body can be set to be larger without altering the cross-section of the exhaust pipes.

Additionally, since the lower end portion of the cushion unit is rotatably supported within the range of said cross-member, preferably directly joint with the cushion bracket of the rear arm, the stress and moment in the longitudinal direction of the vehicle body acting on the connecting portion of the cushion bracket and the both arm portions of the rear arm can be reduced. Accordingly the reinforcing member required at that point, if any, can be designed to be small contributing to reduce the weight of the rear arm.

Preferred embodiment of the present invention are laid down in the sub-claims.

Further objectives, features and advantages of the present invention will become more apparent from the following description of a specific embodiment of the present invention in conjunction with the associated drawings, wherein:
Figure 1 is a side view showing a motorcycle according to the present invention,
Figure 2(a) to 2(c) is a rear arm of the rear suspension of the motorcycle according to the present invention, among which

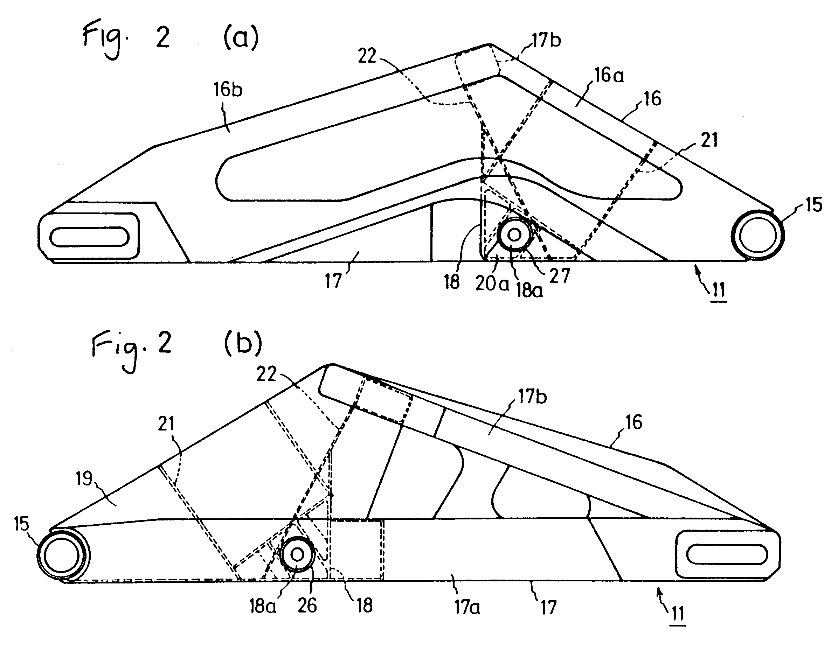

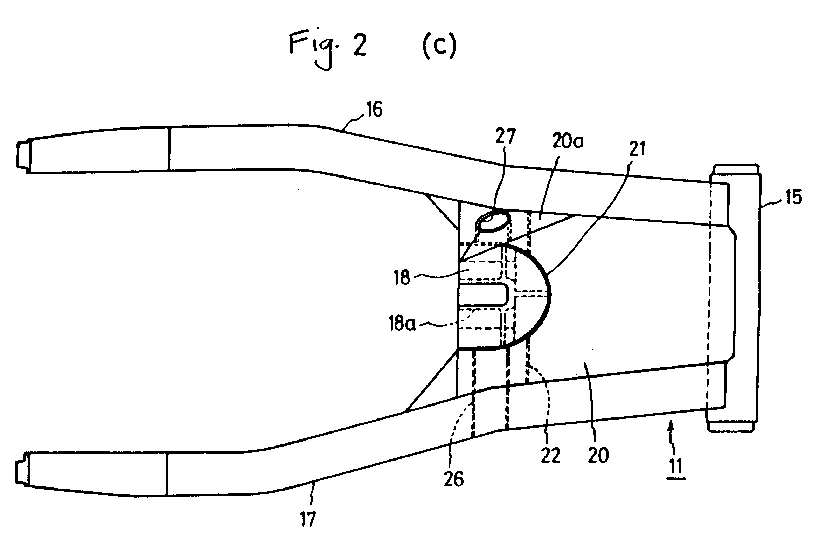

Figure 2(a) is right side view thereof,
Figure 2(b) is a left side view thereof,
Figure 2(c) is a bottom view of said rear arm according to an embodiment of the present invention,

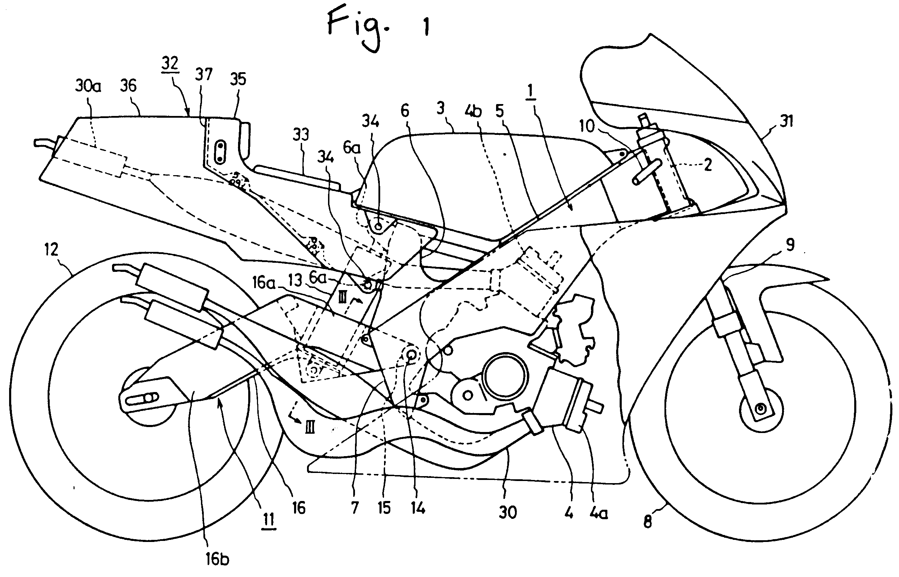

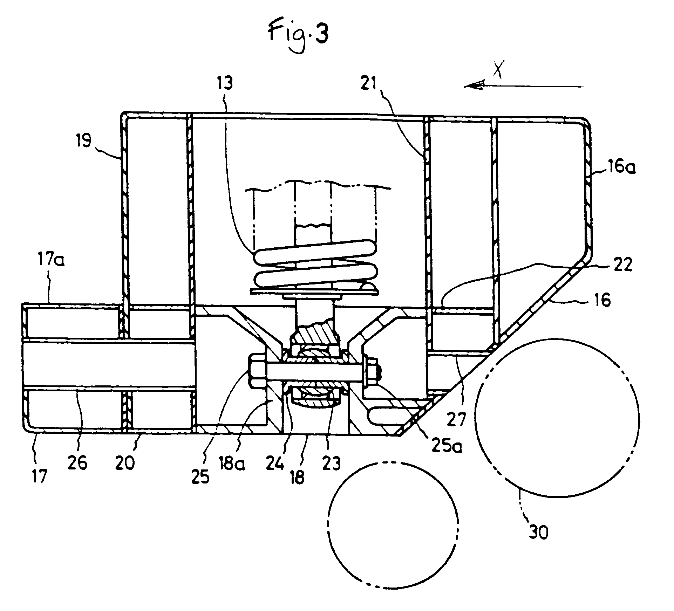

Figure 3 is a sectional view along the line III-III in figure 1.

Figure 1 schematically shows a motorcycle 1 in side view to which the present invention is applied. Said motorcycle 1 has a frame which is composed of a head pipe 2, a pair of left and right main frames 5 connected to said head pipe 2 for supporting the fuel tank 3 and a V-type four cylinder engine 4, a back stay 6 spanned between both left and right main frames 5 and a rear arm bracket 7, connected to the lower portions of the afore indicated main frames 5. Of course the above indication mentions the main portions of the frame 1 of the motorcycle only. The head pipe 2 of the frame 1 rotatably supports the front fork 9 which is adapted to suspend a front wheel 8, and a handle bar 10 for operating said front fork 9. A bracket 6a for securing a seat cowl as described later one projects rearwardly of the vehicle body on the back stay 6 of the frame 1.

Swingably supported on the rear arm bracket 7 is a rear arm 11 supporting a rear wheel 12, said rear arm 11 is supported in a shock absorbing manner at the frame 1 by means of a cushion unit 13 which, in this specific case is a cushion unit 13 the damping force of which is controlled electronically.

The afore-mentioned rear arm 11 as specifically shown in figures 2 and 3 is substantially composed of a head pipe 15 penetrated by a pivot shaft 14 a right and left side arm portions 16 and 17, respectively, and a cushion bracket 18 to which the lower end portion of the cushion unit 13 is connected. The rear arm 11 is swingably supported by the rear arm bracket 7 of the frame 1 through the pivot shaft 14.

As can be gathered from figure 3, there is an upper side outer panel 19 provided which covers a front portion of the rear arm 11 and extends upwards from the left side arm portions 17 to be spanned and extend transversely to the right side arm portions 16 being provided with an opening at its upper portion through which the cushion unit 13 is inserted. The front portion of the rear arm 11, moreover, is covered by a lower side outer panel 20 (see figure 2c) which extends to be connected to a bottom portion and a back portion of a cushion bracket 18. Within the opening portion of the upper side outer panel 19 a cylindrical inner member 21 is provided to which the cushion bracket 18 and an adjacent portion of the cushion unit 13 is fitted and joined. Moreover, reinforcement plates 22 are disposed between the cylindrical inner member 21 and the left and right side arm portions 16 and 17.

Accordingly the cushion bracket 18 is connected with both left and right side related arm portions 16, 17 through the above upper side outer panel 19, and the lower side outer panel 20 at least these members forming a cross-member connecting the left and right side arm portions 16, 17 of the rear arm 11. In this case, moreover, a reinforcement plate 22 supplements said cross-member structure.

As shown in figure 2(a) the right side arm portion 16 has a front leg 16a extending from the head pipe 15 rearwards and slantly upwards and, moreover, has a rear leg 16b extending from the top rear end of the front leg 16a rearwards and slantly downwards. Thus the right side arm portion 16 is generally designed in an inverted V-shape integrally formed of the front and rear legs 16a,16b and an obtuse angle in between both of said legs 16a,16b.

As shown in figure 3, the lower edge portion of the right side arm portion 16 is formed slantly in such a manner that its thickness in a direction of a rear wheel axle shaft (arrow X in Fig. 3), gradually reduces the lower the right side arm portion 16 extends. In this way a lower face of the right side arm portion and a right end face of the cross-member form a continuous slant.

Moreover, as is apparent from figure 2(b), the left side arm portion 17 is provided with a leg 17a which, in its side view, extends from the head pipe 15 generally straight rearwards of the vehicle body and, moreover, a reinforcement member 17b which extends from the rear end of the leg 17a forwardly and upwardly connecting to the top portion of the V-shaped arm portion 16.

In order to establish a low level and convenient support of the lower end of the cushion unit 13 (as shown in figure 3) the cushion bracket 18 is provided with a pair of supporting members 18a which are disposed opposite to one another and spaced apart providing a distance sufficient to insert the lower end of the cushion unit 13. A joining bolt 25 rotatably supporting said lower end portion of the cushion unit 13 through a bearing 23 and collars 24 is inserted in transverse direction in parallel to the wheel shaft axis and is attached to said supporting members 18a. The mounting position of the cushion bracket 18 is selected in such a manner that the left side supporting member 18a is disposed just beside the leg 17a of the left side arm portion 17 whereas the upper side portion of the right side supporting member 18a is positioned just in the bend region of the right side arm portion 16 corresponding with its upper side to the lower edge thereof.

The joining bolt 25 rotatably supporting the lower end portion of the cushion unit 13 is insertable through a tube 26 provided on the left side of the cushion bracket 18, penetrating the left side arm portion 17, the upper side outer panel 19 and engaging the cylindrical 21, respectively. Substantially opposite to said tube 26 and coaxially to the joining bolt 25 another short tube portion 27 is provided through which a nut 25 for fastening the joining belt 25 is inserted and assessable, said tube portion 27 being disposed on the right side of the cushion bracket 18 and beneath the right side arm portion 16 while penetrating a side plate 28 which is provided in conjunction with the lower side outer panel 20 and the cylindrical inner member.

Exhaust pipes 30 are connected to the V-type 4-cylinder engine 4, one for each cylinder. The two of these exhaust pipes 30 which are connected to the lower cylinders 4a of the engine 4 extend from below the engine 4 towards the right side rear portion of the vehicle body through the space beneath the bend of the right side arm portion 16 which is bent in an inverted V-shape providing an obtuse angle in between its legs 16a,16b, whereas the other two exhaust pipes 30 which are connected to the upper cylinders 4b of the engine 4 extend from an area below the fuel tank 3 to a region slantly outwardly above the rear wheel 12. A silencer/muffler assembly 30a is disposed on the rear end of each of the exhaust pipes 30.

In figure 1 a front cowling for protecting the rider from the wind pressure while reducing the air resistance is shown and this cowling 31 is supported through brackets (not shown) to the frame 1. The rear portion of the motorcycle comprises a seat cowl 32 having a generally inverted U-shaped cross-section to surround and cover the two exhaust pipes 30 disposed above the rear wheel from the top and from both sides. Moreover, the seat cowl 32 is designed to get bisected along a dividing line 27 to split up into a front seat cowl 35 and a rear seal cowl 36 detachably supported on the rear portion of the front seat cowl 35. On the front seat cowl 35 a seat 33 is mounted which, in turn, is fastened to the brackets 6a of the frame 1 through fastening bolts 34. The parting line 37 extends from the rear of the seat 33 slantly across both sides of the seat cowl 32 forwardly and downwardly to surround the biggest portion of the exhaust pipes 30. Thus, by means of dividing the seat cowl 30 through the dividing line 37, the front seat cowl 35 will function as a cantilever having a generally triangular side view which enables to design the front seat cover with a smallest dimension required. In order to meet the requirements for supporting the rider's weight the front seat cowl 35 is designed rigidly from a laminated structure composed of a plastic layer which is reinforced by polyamide fibres of aromatic polyamide, said reinforced plastic layer being sandwiched in between reinforced plastic layers which contain carbon fibres as reinforcing materials. The seat cowl 35 is formed integrally from these plastic materials. The rear seat cowl 36 is integrally formed from a single layer of reinforced plastic material incorporating reinforcing carbon fibres and, moreover, is provided with an opening for the silencer 30a at the rear end portion thereof.

In order to assemble the cushion unit 13 of the motorcycle on the rear arm 11 which has a reinforced structure as indicated above, firstly the lower end portion of the cushion unit 13 is inserted into the cylindrical inner member 21 through the upper opening of the upper side outer panel 19 on the rear arm 11 and is positioned between said pair of supporting members 18a of the cushion bracket 18. Then, the joining bolt 25 and its associated nut 25a are inserted from outside of the left and right side arm portions 16 and 17 into the tubes 26 and 27 and the lower end portion of the cushion unit 13 is connected to the cushion bracket 18. In this way the cushion unit 13 can easily be mounted. On the other hand, in order to dismount the cushion unit 13 from the rear arm 11, it is only necessary to insert a socket wrench or the like in the above tubes 26 and 27 to loosen the bolt 25 and the nut 26.

With the arrangment according to the present invention considerable merits are gained in that it becomes possible to dispose the exhaust pipes 30 very close to the vehicle body avoiding any interference with the rear arm 11 without any need to alter the cross-sectional shape of the exhaust pipes. This performance is achieved by means of the design freedom to dispose the exhaust pipes 30 beneath the bent portion of the right side arm portion 16 of the rear arm 11 which, in its side view, is designed in an inverted V-shape providing an obtuse angle in between its both legs 16a,16b. Thus, the exhaust pipes 30 do not form any obstacles for obtaining a sufficiently large bank angle of the motorcycle.

According to a favourite embodiment of the present invention the lower end portion of the cushion unit 13 is directly connected to the cushion bracket 18 of the rear arm 11 and, consequently, the moment in the longitudinal direction of the vehicle body acting on the connecting portion of the cushion bracket 18 and the left and right side arm portions 16 and 17 of the rear arm 11 is reduced. Accordingly, the reinforcement member required at that portion can be made small and less heavy.

Moreover, as the upper side portion of the right side supporting member 18a is positioned just in the bend region of the right side arm portion 16 bent in "V"-shape to an obtuse angle with its profile leg corrresponding to the lower edge of the slant profile of the arm position 16, a part of the cushion bracket 18 is made to be connected to the right side arm portion 16 and the cushion bracket 18 is secured ridigly on said right side arm portion 16. The layout of the cushion bracket 18 as indicated above enables the tube 27 for installing the nut 25a to be disposed beneath the right side arm portion 16 and, accordingly, there is no need to provide an opening through the right side arm portion 16 for inserting or dismounting the nut 25a adding to an improved rigidity of the right side arm portion 16.

Although in the present embodiment there is a tube 26 provided for inserting or dismounting the jointing bolt 25 on the left side of the cushion bracket 18, such a tube 26 does not form an obligatory feature and design but said tube 26 can also be eliminated by providing an opening through the bottom portion of the cushion bracket 18 of its left side supporting member 18a for the insertion or release of a nut 25a. In this case, contrary to the present embodiment the joining bolt 25 would be inserted from the right side of the vehicle body opposite to the present embodiment. In such a case there is no opening required in the left side arm portion 17 and, therefore, the rigidity and load bearing capacity of same could be elevated. Moreover, even though the afore discussed embodiment reflects the advantageous direct and immediate connection of the lower portion of the cushion unit 13 without a link mechanism to the rear arm 11, the present invention is not cushion to be limited to such a structure but a linkage preferably a link end of the cushion could also be used in between the lower end of the cushion unit 13 and the motorcycle frame including the rear arm 11.

## Claims

1. A motorcycle provided with a frame including a rear arm bracket swingably supporting a rear arm adapted to hold a rear wheel of the motorcycle, said rear arm comprising right side and a left side arm portions and a cushion unit which is supported through the rear arm at its lower end and through the frame at its upper end, one of said side arm portions of the rear arm being formed generally in an inverted V-shape with an obtuse angle between its legs enabling engine exhaust pipes to extend sidewardly of a vehicle body of the motorcycle through a space left under the bend of said side arm portion, whereas the other of said side arm portions extends substantially straight in side view,
**characterized in that,**
a cross member (19,20) extends transverely between the bend of said V-shaped arm portion (16) and the opposite side arm portion (17) and in that a lower end portion of the cushion unit (13) is rotatably supported within the range of said cross member (19,20).

2. A motorcycle as claimed in claim 1,
**characterized in that,**
that the cross-member is composed at least of an upper side outer panel (19) and a lower side outer panel (20).

3. A motorcycle as claimed in claims 1 or 2,
**characterized in that,**
the rear arm (11) comprising a head pipe (15), penetrated by a pivot shaft (14), said right side and left side arm portions (16,17) and a cushion bracket (18) supporting a lower end portion of the cushion unit (13), said rear arm (11) being swingably supported through the pivot shaft (14) at the rear arm bracket (7) of the frame (1).

4. A motorcycle as claimed in claims 2 or 3,
**characterized in that,**
the upper side outer panel (19) covers a front portion of the rear arm (11) and extends upwardly from the left side arm portion (17) to be spanned to the right side arm portion (16), and in that the upper side outer panel (19) provides an opening at its upper portion through which the cushion unit (13) is inserted.

5. A motorcycle as claimed in at least one of the preceding claims 2 to 4,
**characterized in that,**
the front portion of the rear arm (11) is covered with a lower side outer panel (20) which is connected to a bottom portion and a back portion of the cushion bracket (18).

6. A motorcycle as claimed in at least one of the preceding claims 2 to 5,
**characterized in that,**
a cylindrical inner member (21) is provided within the upper opening portion of the upper side, outer panel (19) adapted to receive the cushion bracket (18) and a lower part of the cushion unit (13), establishing connection to a pair of supporting members (18a) of the cushion bracket (18), said supporting members (18a) are adapted to rotatably support the lower end portion of the cushion unit (13).

7. A motorcycle as claimed in at least one of the preceding claims 2 to 6,
**characterized in that,**
the above right side arm portion (16) comprises a front leg (16a) extending from the head pipe (15) rearwards and slantly upwards and a rear leg (16b) extending from the top end of the front leg (16a) rearwards and slantly downwards to form said right side arm portion (16) in a generally inverted V-shape with an obtuse angle in between both legs (16a,16b) of the side arm portion (16).

8. A motorcycle as claimed in claim 7,
**characterized in that,**
a lower edge portion of the right side arm portion (16) is formed slantly in a manner that its thickness in the direction of a wheel axle shaft reduces gradually in a upwards and width wise direction.

9. A motorcycle as claimed in claim 8,
**characterized in that,**
a lower face of the right side arm portion (16) and a right end face of the cross member form a continuous slant.

10. A motorcycle as claimed in at least one of the preceding claims 1 to 9,
**characterized in that,**
a damping force of the cushion unit (13) is electronically controlled.

11. A motorcycle as claimed in at least one of the preceding claims 1 to 9,
**characterized in that,**
a lower end of the cushion unit (13) is connected to the rear arm bracket of the frame through a link mechanism.

12. A motorcycle as claimed in at least one of the preceding claims 2 to 11,
**characterized in that,**
the left side arm portion (17) is provided with a leg (17a), extending from the head pipe (15) generally straight and rearwards in side view whereas a reinforcing member (17b) extends from the rear end of said straight leg (17a) forwards and upwardly connecting to a top portion, i.e. the bend of the right side arm portion (16).

13. A motorcycle as claimed in at least one of the preceding claims 2 to 12,
**characterized in that,**
the cushion bracket (18) comprises a pair of supporting members (18a) spaced apart from each other with a distance sufficient to receive the lower end portion of the cushion unit (13) therebetween and a joining bolt (25) for rotatbly supporting said lower end portion of the cushion unit (13) through a bearing (23) and collars (24) is adapted to be installed crosswise in the wheel shaft direction borne by said supporting portions (18a).

14. A motorcycle as claimed in at least one of the preceiding claims 2 to 13,
**characterized in that,**
an assembly position of the cushion bracket (18) is selected such, that the one left side related supporting portion (18a) is disposed just beside the straight leg (17a) of the left side arm portion (17) whereas an upper side portion of the right side related supporting portion (18a) is positioned close to the bend of the right side arm portion (16), the upper side of the right side related supporting member (18a) substantially correspond to the lower edge of the right side arm portion (16).

15. A motorcycle as claimed in at least one of the preceding claims 2 to 14,
**characterized in that,**
there is a tube (26) provided coaxially to the axis of the joining bolt (25) for supporting the lower end portion of the cushion unit (13), said tube (26) being provided on the left side of the cushion bracket (18) penetrating the left side am portion (17), the upper side outer panel (19) and the cylindrical inner member (21), respectively.

16. A motorcycle as claimed in at least one of the preceding claims 1 to 15,
**characterized by**
a four cylinder engine (4) comprising exhaust pipes (30) the number of which corresponds to the number of the cylinders of the engine (4), said engine being positioned to comprise two lower and upper cylinders (4a,4b) respectively with said two exhaust pipes (30) connected to the lower cylinders (4a) extending from below the engine (4) toward the right side rear portion of the vehicle body through the space beneath the bent portion of the right side arm portion (16) having an inverted V-shape, whereas the other two exhaust pipes (30) connected to the other cylinders (4b) of the engine (4) extend from said cylinders and below the fuel tank (3) to a region above the rear wheel (12).

17. A motorcycle as claimed in at least one of the preceding claims 1 to 16,
**characterized in that**,
there is a seat cowl (32) provided having a generally inverted U-shaped cross-sectional form to cover the exhaust pipes (30) of the upper cylinder (4b) which are disposed above the rear wheel (12), and in that said seat cowl (32) is adapted to be split along a dividing line (37) into a front seat cowl (35) supporting a seat (33) which, in turn, is secured at brackets (6a) of the frame (1) through fastening bolts (34), and a rear seat cowl (36) detachably assembled on a rear portion of the front seat cowl (35).

18. A motorcycle as claimed in the preceding claim 17,
**characterized in that**,
the dividing line (37) extends from behind the seat (33) inclined forwardly downwards across both sides of the seat cowl (32) and around the biggest portion of the adjacent exhaust pipes (30).

## Patentansprüche

1. Motorrad mit einem Rahmen, der aufweist eine Hinterarmhalterung, die schwenkbar einen Hinterarm lagert, der vorgesehen ist, um ein Hinterrad des Motorrades zu halten, wobei der Hinterarm rechts- und linksseitige Armabschnitte und eine Stoßdämpfereinheit aufweist, die an ihrem unteren Ende durch den Hinterarm und an ihrem oberen Ende durch den Rahmen gelagert ist, wobei einer der seitlichen Armabschnitte des Hinterarmes im wesentlichen in Form eines umgekehrten V gebildet ist, mit einem stumpfen Winkel zwischen seinen Schenkeln, so daß sich die Motorabgasrohre seitwärts in Bezug auf den Fahrzeugrahmen des Kraftfahrzeuges durch einen Raum erstrecken können, der unter der Biegung dieses seitlichen Armabschnittes verbleibt, während der andere Armabschnitt sich im wesentlichen geradlinig, gesehen in Seitenansicht, erstreckt, **dadurch gekennzeichnet**, das ein Querteil (19, 20) sich quer zwischen der Biegung des V-förmigen Armabschnittes (16) und dem gegenüberliegenden seitlichen Armabschnitt (17) erstreckt, und daß ein unterer Endabschnitt der Stoßdämpfereinheit (13) drehbar innerhalb des Bereiches des Querteiles (19, 20) gelagert ist.

2. Motorrad nach Anspruch 1, **dadurch gekennzeichnet**, daß das Querteil aus zumindest einem oberseitigen, äußeren Paneel (19) und einem unterseitigen, äußeren Paneel (20) besteht.

3. Motorrad nach Anspruch 1 oder 2, **dadurch gekennzeichnet**, daß der Hinterarm (12) ein Kopfrohr (15) aufweist, das von einer Schwenkwelle (14) durchdrungen wird, wobei die rechts- und linksseitigen Armabschnitt (16, 17) und eine Stoßdämpferhalterung (18) einen unteren Endabschnitt der Stoßdämpfereinheit (13) lagern, wobei der Hinterarm (11) schwenkbar durch die Schwenkwellen (14) an der Hinterarmhalterung (7) des Rahmens (1) gelagert ist.

4. Motorrad nach Anspruch 2 oder 3, **dadurch gekennzeichnet**, daß das oberseitige äußere Paneel (19) einen Vorderabschnitt des Hinterarmes (11) bedeckt und sich von dem linksseitigen Armabschnitt (17) aufwärts erstreckt, um sich zu dem rechtsseitigen Armabschnitt (16) zu erstrecken, und daß das oberseitige äußere Paneel (19) eine Öffnung an seinem oberen Abschnitt aufweist, durch die die Stoßdämpfereinheit (13) eingesetzt ist.

5. Motorrad nach zumindest einem der vorhergehenden Ansprüche 2 bis 4, **dadurch gekennzeichnet**, daß der Vorderabschnitt des Hinterarmes (11) durch ein unterseitiges äußeres Paneel (20) abgedeckt ist, das mit einem Bodenabschnitt und einem Rückabschnitt der Stoßdämpferhalterung (18) verbunden ist.

6. Motorrad nach zumindest einem der vorhergehenden Ansprüche 2 bis 5, **dadurch gekennzeichnet**, daß ein zylindrisches Innenteil (21) innerhalb des oberen Öffnungsabschnittes des oberseitigen, äußeren Paneeles (19) vorgesehen ist, zur Aufnahme der Stoßdämpferhalterung (18) und eines unteren Teiles der Stoßdämpfereinheit (13), unter Herstellung einer Verbindung zu einem Paar Lagerungsteile (18a) der Stoßdämpferhalterung (18), wobei die Lagerungsteile (18a) vorgesehen sind, um den unteren Endabschnitt der Stoßdämpfereinheit (13) drehbar zu lagern.

7. Motorrad nach zumindest einem der vorhergehenden Ansprüche 2 bis 6, **dadurch gekennzeichnet**, daß der rechtsseitige Armabschnitt (16) einen Vorderschenkel (16a) aufweist, der sich von dem Kopfrohr (15) nach rückwärts und geneigt nach aufwärts erstreckt, und einen Hinterschenkel (16b) aufweist, der sich vom oberen Ende des Vorderschenkels (16a) nach rückwärts und geneigt nach unten erstreckt, um den rechtsseitigen Armabschnitt (16) im wesentlichen in der Form eines umgekehrten V auszuführen, mit einem stumpfen Winkel zwischen beiden Schenkeln (16a, 16b) des seitlichen Armabschnittes (16).

8. Motorrad nach Anspruch 7, **dadurch gekennzeichnet**, daß ein unterer Kantenabschnitt des rechtsseitigen Armabschnittes (16) geneigt ausgebildet ist derart, daß seine Dicke in Richtung der Radachsenwelle sich allmählich nach oben und in Querrichtung vermindedrt.

9. Motorrad nach Anspruch 8, **dadurch gekennzeichnet**, daß eine Unterseite des rechtsseitigen Armabschnittes (17) und eine rechte Endseite des Querteiles eine kontinuierliche Schräge bilden.

10. Motorrad nach zumindest einem der vorhergehenden Ansprüche 1 bis 9, **dadurch gekennzeichnet**, daß eine Dämpfungskraft der Stoßdämpfereinheit (13) elektronisch kontrolliert ist.

11. Motorrad nach zumindest einem der vorhergehenden Ansprüche 1 bis 9, **dadurch gekennzeichnet**, daß ein unteres Ende der Stoßdämpfereinheit (13) mit der Hinterarmhalterung des Rahmens durch eine Verbindungsvorrichtung verbunden ist.

12. Motorrad nach zumindest einem der vorhergehenden Ansprüche 2 bis 11, **dadurch gekennzeichnet**, daß der linksseitige Armabschnitt (17) mit einem Schenkel (17a) versehen ist, der sich von dem Kopfrohr (15) im wesentlichen geradlinig und nach hinten, gesehen in Seitenansicht, erstreckt, während ein Versteifungsteil (17b) sich von dem hinteren Ende des geraden Schenkels (17a) nach vorwärts und aufwärts zur Verbindung mit einem oberen Abschnitt, d.h. der Biegung des rechtsseitigen Armabschnittes (16) erstreckt.

13. Motorrad nach zumindest einem der vorhergegebdeb Ansprüche 2 bis 12, **dadurch gekennzeichnet**, daß die Stoßdämpferhalterung (18) ein Paar Lagerungsteile (18a) aufweist, die voneinander mit einem Abstand beabstandet sind, der ausreicht, um den Endabschnitt der Stoßdämpfereinheit (13) zwischen sich aufzunehmen und daß eine Verbindungsschraube (25) zur drehbaren Lagerung des unteren Endabschnittes der Stoßdämpfereinheit (13) durch ein Lager (23) und Schultern (24) vorgesehen ist, um quer in Radwellenrichtung angeordnet zu werden, getragen durch die Lagerungsabschnitte (18a).

14. Motorrad nach zumindest einem der vorhergehenden Ansprüche 2 bis 13, **dadurch gekennzeichnet**, daß eine Montageposition der Stoßdämpferhalterung (18) derart ausgewählt ist, daß der eine, der linken Seite zugehörige Lagerungsabschnitt (18a) gerade neben dem geradlinigen Schenkel (17a) des linksseitigen Armabschnittes (17) angeordnet ist, während ein oberseitiger Abschnitt des zur rechten Seite gehörigen Lagerungsabschnittes (18a) nahe zu der Biegung des rechtsseitigen Armabschnittes (16) angeordnet ist und die obere Seite des der rechten Seite zugehörigen Lagerungsteiles (18a) im wesentlichen korrespondierend zu der unteren Kante des rechtsseitigen Armabschnittes (16) angeordnet ist.

15. Motorrad nach zumindest einem der vorhergehenden Ansprüche 2 bis 14, **dadurch gekennzeichnet**, daß ein Rohr (26) koaxial zur Achse der Verbindungsschraube (25) zur Lagerung des unteren Endabschnittes der Stoßdämpfereinheit (13) vorgesehen ist, wobei das Rohr (16) an der linken Seite der Stoßdämpferhalterung (18) angeordnet ist und den linksseitigen Armabschnitt (17), das oberseitige, äußere Paneel (19) und das zylindrische Innenteil (21) jeweils durchdringt.

16. Motorrad nach zumindest einem der vorhergehenden Ansprüche 1 bis 15, **gekennzeichnet durch** einen Vierzylindermotor (4) mit Abgasrohren (30), deren Anzahl der Anzahl der Zylinder des Motors (4) entspricht, wobei der Motor derart angeordnet ist, daß er zwei untere und obere Zylinder (4a, 4b) jeweils aufweist, wobei die zwei Abgasrohre (30), die mit den unteren Zylindern (4a) verbunden sind, sich von unterhalb des Motors (4) zur rechten Seite des Hinterabschnittes des Fahrzeugrahmens durch den Raum unterhalb des Biegungsabschnittes des rechtsseitigen Armabschnittes (16), der die Form eines umgekehrten V besitzt, erstrecken, während die zwei anderen Abgasrohre (30), verbunden mit den anderen Zylindern (4b) des Motors (4), sich von den Zylindern und von unterhalb des Kraftstofftankes (3) zu einem Bereich oberhalb des Hinterrades (12) erstrecken.

17. Motorrad nach zumindest einem der vorhergehenden Ansprüche 1 bis 16, **dadurch gekennzeichnet**, daß eine Sitzverkleidung (32) vorgesehen ist, die im Querschnitt im wesentlichen die Form eines umgekehrten U aufweist, um die Abgasrohre (30) des oberen Zylinders (4b), die oberhalb des Hinterrades (12) angeordnet sind, abzudecken, und daß die Sitzverkleidung (32) vorgesehen ist, entlang einer Teilungslinie (37) in eine vordere Sitzverkleidung (35) geteilt zu sein, die einen Sitz (33) lagert, der seinerseits an Halterungen (6a) des Rahmens (1) durch Befestigungsschrauben (34) befestigt ist, und in eine hintere Sitzverkleidung (36) geteilt zu sein, die lösbar an einem hinteren Abschnitt der vorderen Sitzverkleidung (35) montiert ist.

18. Motorrad nach Anspruch 17, **dadurch gekennzeichnet**, daß die Teilungslinie (37) sich von hinter dem Sitz (33) geneigt nach vorwärts und unten über beide Seiten der Sitzverkleidung (32) und rund um den größten Abschnitt der benachbarten Abgasrohre (39) erstreckt.

## Revendications

1. Motocyclette pourvue d'un cadre comprenant un support de bras arrière, supportant un bras arrière oscillant adapté de façon à maintenir une roue arrière de la motocyclette, ledit bras arrière comprenant des parties de bras droit et bras gauche et un ensemble amortisseur qui est supporté par le bras arrière à son extrémité inférieure et par le cadre à son extrémité supérieure, l'une desdites parties de bras latéral du bras arrière étant pourvue d'une forme globale de V inversé, un angle obtus étant formé entre ses jambages, permettant aux tuyaux d'échappement de moteur de s'étendre latéralement par rapport à une carrosserie de véhicule de la motocyclette, dans un espace laissé au-dessous du coudage de ladite partie de bras latéral, tandis que l'autre partie desdites parties de bras latéral s'étend de façon pratiquement rectiligne en vue de côté,
caractérisée en ce que :
un organe transversal (19, 20) s'étend transversalement entre la coudure de ladite partie de bras (16) en forme de V et la partie de bras latéral (17) opposée et en ce qu'une partie d'extrémité inférieure de l'ensemble amortisseur (13) est monté tournante dans la zone dudit organe transversal (19, 20).

2. Motocyclette selon la revendication 1, caractérisée en ce que :
l'organe transversal est constitué d'au moins un panneau extérieur latéral (19) supérieur et d'un panneau extérieur latéral (20) inférieur.

3. Motocyclette selon la revendication 1 ou 2, caractérisée en ce que :
le bras arrière (11) comprend un tuyau de tête (15), pénétré par un arbre de pivotement (14), lesdites parties de bras doit et bras gauche (16, 17) et un support d'amortisseur (18) supportant une partie d'extrémité inférieure de l'ensemble amortisseur (13), ledit bras arrière (11) étant supporté oscillant par l'arbre de pivotement (14), sur le support de bras arrière (7) du cadre (1).

4. Motocyclette selon la revendication 2 ou 3, caractérisée en ce que :
le panneau extérieur latéral supérieur (19) recouvre une partie avant du bras arrière (11) et s'étend vers le haut depuis la partie de bras gauche (17), vers la partie de bras droit (16) et en ce que le panneau extérieur latéral supérieur (19) présente une ouverture sur sa partie supérieure, dans laquelle est inséré l'ensemble amortisseur (13).

5. Motocyclette selon au moins l'une des revendications 2 à 4 précédentes, caractérisée en ce que :
la partie avant du bras arrière (11) est recouverte par un panneau extérieur latéral (20) inférieur qui est relié à une partie inférieure et à une partie arrière du support d'amortisseur (18).

6. Motocyclette selon au moins l'une des revendications 2 à 5 précédentes, caractérisée en ce que :
un organe intérieur (21) cylindrique est prévu dans la partie d'ouverture supérieure du panneau extérieur latéral supérieur (19), adaptée de façon à loger le support d'amortisseur (18) et une partie inférieure de l'ensemble amortisseur (13), ce qui établit une connexion par rapport à un couple d'organes de support (18a) du support d'amortisseur (18), lesdits organes de support (18a) étant adaptés de façon à supporter à rotation la partie d'extrémité inférieure de l'ensemble amortisseur (13).

7. Motocyclette selon au moins l'une des revendications 2 à 6 précédentes, caractérisée en ce que :
la partie de dessus du bras droit (16) comprend un jambage avant (16a) s'étendant depuis le tuyau de tête (15), vers l'arrière et de façon inclinée vers le haut et un jambage arrière (16b) s'étendant depuis l'extrémité supérieure du jambage avant (16a), vers l'arrière et de façon inclinée vers le bas, afin de conférer à ladite partie de bras droit (16) une forme globale de V inversé tout en formant un angle obtus entre les deux jambages (16a, 16b) de la partie de bras latéral (16).

8. Motocyclette selon la revendication 7, caractérisée en ce que :
une partie de bord inférieur de la partie de bras droit (16) est formée de façon inclinée, de manière que son épaisseur dans la direction d'un arbre d'essieu de roue se réduise graduellement dans une direction orientée vers le haut et dans le sens de la largeur.

9. Motocyclette selon la revendication 8, caractérisée en ce que :
une face inférieure de la partie de bras droit (16) et une face d'extrémité de l'organe transversal forment une pente continue.

10. Motocyclette selon au moins l'une des revendications 1 à 9 précédentes, caractérisée en ce que :
une force d'amortissement de l'ensemble amortisseur (13) est commandée électroniquement.

11. Motocyclette selon au moins l'une des revendications 1 à 9 précédentes, caractérisée en ce que :
une extrémité inférieure de l'ensemble amortisseur (13) est reliée au support de bras arrière du cadre, par l'intermédiaire d'un mécanisme d'articulation.

12. Motocyclette selon au moins l'une des revendications 2 à 11 précédentes, caractérisée en ce que :
la partie de bras gauche (17) est pourvue d'un jambage (17a) s'étendant depuis le tuyau de tête (15), de façon globalement rectiligne et vers l'arrière en vue de côté, tandis qu'un organe de renforcement (17b) s'étend vers l'avant et vers le haut depuis l'extrémité arrière dudit jambage rectiligne (17a), de façon à être connecté à une partie supérieure, c'est-à-dire la coudure de la partie de bras droit (16).

13. Motocyclette selon au moins l'une des revendications 2 à 12, caractérisée en ce que :
le support d'amortisseur (18) comprend un couple d'organes de support (18a) espacés entre eux d'une distance suffisante pour loger entre eux la partie d'extrémité inférieure de l'ensemble amortisseur (13) et un boulon de liaison (25), servant à supporter à rotation ladite partie d'extrémité inférieure de l'ensemble amortisseur (13) par l'intermédiaire d'un palier (23) et de bagues (24), est adapté de façon à être monté transversalement dans la direction d'essieu de roue, tout en étant supporté par lesdites parties de support (18a).

14. Motocyclette selon au moins l'une des revendications 2 à 13 précédentes, caractérisée en ce que :
une position d'assemblage du support d'amortisseur (18) est sélectionnée de manière que la partie de support (18a) concernant le côté gauche soit disposée juste à côté du jambage rectiligne (17a) de la partie de bras gauche (17), tandis qu'une partie latérale supérieure de la partie de support (18a) concernant le côté droit est disposée au voisinage immédiat de la coudure de la partie de bras droit (16), le côté supérieur de l'organe de support (18a) concernant le côté droit correspondant pratiquement au bord inférieur de la partie de bras droit (16).

15. Motocyclette selon au moins l'une des revendications 2 à 14 précédentes, caractérisée en ce que :
il existe un tube (26) prévu coaxialement par rapport à l'axe du boulon de liaison (25), afin de supporter la partie d'extrémité inférieure de l'ensemble amortisseur (13), ledit tube (26) étant prévu sur le côté gauche du support d'amortisseur (18) pénétrant respectivement la partie de bras gauche (17), le panneau extérieur latéral supérieur (19) et l'organe intérieur cylindrique (21).

16. Motocyclette selon au moins l'une des revendications 1 à 15 précédentes, caractérisée par :
un moteur à quatre cylindres (4) comprenant des tuyaux d'échappement (30) dont le nombre correspond au nombre des cylindres du moteur (4), ledit moteur étant disposé de manière à comprendre respectivement deux cylindres (4a, 4b) inférieurs et supérieurs, lesdits deux tuyaux d'échappement (30) reliés aux cylindres inférieurs (4a) s'étendant de dessous du moteur (4) vers la partie arrière droite de la carrosserie de véhicule, dans l'espace situé au-dessous de la partie coudée de la partie de bras droit (16) présentant une forme de V inversé, tandis que les deux autres tuyaux d'échappement (30) reliés aux autres cylindres (4b) du moteur s'étendent depuis lesdits cylindres et au-dessous du réservoir de carburant (3), vers une zone située au-dessus de la roue arrière (12).

17. Motocyclette selon au moins l'une des revendications 1 à 16 précédentes, caractérisée en ce que :
il est prévu un capot de siège (32) présentant une section transversale globalement en forme de U inversé, afin de recouvrir les tuyaux d'échappement (30) du cylindre supérieur (4b) qui sont disposés au-dessus de la roue arrière (12) et en ce que ledit capot de siège (32) est adapté de façon à être divisé le long d'une ligne de division (37) en un capot de siège avant (35) supportant un siège (33) qui est fixé à son tour à des supports (6a) du cadre (1) par l'intermédiaire de boulons de fixation (34) et en un capot de siège arrière (36) monté de manière amovible sur une partie arrière du capot de siège avant (35).

18. Motocyclette selon la revendication 17 précédente, caractérisée en ce que :
la ligne de division (37) s'étend de derrière le siège (33), en s'inclinant vers l'avant et vers le bas des deux côtés du capot de siège (32) et autour de la partie la plus large des tuyaux d'échappement (30) adjacents.
